# EUROPÄISCHE PATENTSCHRIFT

(11) **EP 2 873 708 B1**
(45) Veröffentlichungstag und Bekanntmachung des Hinweises auf die Patenterteilung: **13.02.2019**
(21) Anmeldenummer: 13193519.9
(22) Anmeldetag: 19.11.2013
(51) Int. Cl.: C09J 11/06, C09J 9/00, C09K 9/02, G01K 11/16, C08K 5/00, C09J 153/02

(54) **Klebstoffzusammensetzung**
Adhesive composition
Composition d'adhésif

(43) Veröffentlichungstag der Anmeldung: 20.05.2015
(73) Patentinhaber: Artimelt AG, 6210 Sursee (CH)
(72) Erfinder: Meincke, Olaf, 3014 Bern (DE); Andres, Philip, 8700 Küsnacht (DE); Blickenstorfer, Benno, 4051 Basel (DE); Griebel, Thomas, 6331 Hünenberg (DE)
(74) Vertreter: Hepp Wenger Ryffel AG

(56) Entgegenhaltungen:
- EP-A1- 0 054 155
- WO-A1-2004/039683
- WO-A1-2010/064447
- DE-A1- 10 304 795
- JP-A- 2001 247 828

## Beschreibung

Die Erfindung betrifft eine Klebstoffzusammensetzung mit zwei thermischen Farbumschlägen. Ferner betrifft die Erfindung die Verwendung und Herstellung eines Systems umfassend die Klebstoffzusammensetzung mit zwei thermischen Farbumschlägen.

Es ist bekannt, dass thermoplastische Klebstoffe bei Erwärmung nahe dem Schmelzpunkt ihre Haftleistung verlieren, so dass eine Klebestelle einfach gelöst werden kann. Durch starkes Abkühlen werden Klebstoffe spröde und brüchig, was ein einfaches Aufbrechen einer Klebestelle ermöglicht. Eine gelöste oder aufgebrochene Klebestelle lässt sich durch einen Erwärmvorgang des Klebers an der Klebestelle gefolgt von Anpressen der Klebestelle und Abkühlen auf Raumtemperatur meist wieder verkleben. Lösen/Aufbrechen und Wiederverkleben der Klebestelle bleibt in der Regel unbemerkt, was insbesondere bei sicherheitsrelevanten Anwendungen nachteilig ist.

Zwar sind chemische Verbindungen bekannt, welche irreversibel Farbumschläge zeigen und welche somit eingesetzt werden können, um das Über- bzw. Unterschreiten von gewissen Grenztemperaturen anzuzeigen. Die Anzahl solcher verfügbaren Verbindungen ist jedoch sehr begrenzt, und die Grenztemperaturen häufig für die konkreten Anwendungsfälle ungeeignet.

Chemische Verbindungen und Zusammensetzungen, welche reversible Farbumschläge bei einer bestimmten Grenztemperatur zeigen (basierend auf Änderungen der Molekül- oder Kristallstruktur), sind in grösserer Vielzahl ebenfalls bekannt. Ein reversibler Farbumschlag (sog. Thermochromie) ist jedoch für sicherheitsrelevante Anwendungen nicht ohne Weiteres anwendbar, da Temperaturschwankungen mit Unter- und Überschreitungen der Grenztemperatur nicht
dauerhaft angezeigt werden.

Ein Schmelzklebstoff mit mindestens einem Thermochromfarbstoff wird in der EP 0 054 155 A1 offenbart.
Weiterhin sind thermochrome Zusammensetzungen bekannt, welche einen sogenannten Memory-Effekt aufweisen. Der einmal eingetretene Farbumschlag wird somit nicht unmittelbar beim Wiederüber- oder -unterschreiten der Grenztemperatur umgekehrt, sondern erst bei einem weitergehenden Erhitzen oder Abkühlen. Derartige Zusammensetzungen sind bspw. beschrieben in EP 2 431 444 A1. Derartige thermochrome Zusammensetzungen mit Memory-Effekt sind im Zusammenhang mit Klebstoffzusammensetzungen noch nicht vorgeschlagen worden.
Es ist daher die Aufgabe der Erfindung, die vorstehend beschriebenen Nachteile von Klebstoffzusammensetzungen zu überwinden; insbesondere eine Klebstoffzusammensetzung bereitzustellen, welche verbesserte Sicherheitseigenschaften auf Basis von Farbänderungen in Abhängigkeit von der Umgebungstemperatur eines Klebstoffes und einer Klebestelle aufweist.
Diese Aufgaben werden durch die in den unabhängigen Patentansprüchen aufgeführten Merkmale gelöst.
Die Erfindung betrifft eine Klebstoffzusammensetzung, welche einen ersten Farbumschlag bei einer Erhöhung der Umgebungstemperatur auf eine Temperatur ≥ T₁ und einen zweiten Farbumschlag bei einer Erniedrigung der Umgebungstemperatur auf eine Temperatur < T₂ aufweist, wobei T₁ > T₂ ist.
Dadurch, dass eine erfindungsgemässe Klebstoffzusammensetzung zwei Farbumschläge aufweist, ist es ermöglicht, sowohl das Unterschreiten einer Temperatur T₂ als auch das Überschreiten einer Temperatur T₁ > T₂
anzuzeigen. Die Farbumschläge basieren hierbei auf ein und demselben Farbbildner , der mit einem Memory-Effekt seine
Farbe reversibel ändert. Es werden zweckmässigerweise weitere Vorkehrungen getroffen, um sicherheitsrelevante Anwendungen zu ermöglichen, wie nachstehend noch im Detail erläutert wird.
Bevorzugt ist die Klebstoffzusammensetzung thermoplastisch (sogenannte hot-melt Zusammensetzung). Es handelt sich hierbei um bei Raumtemperatur feste, im Wesentlichen wasser- und lösungsmittelfreie Klebstoffzusammensetzungen, vorzugsweise Haftklebstoffe (hot-melt pressure sensitive adhesives, HMPSAs), welche aus der Schmelze verarbeitet und welche beim Abkühlen unter Verfestigung physikalisch abbinden.
Erfindungsgemässe thermoplastische Klebstoffzusammensetzungen weisen bevorzugt eine Schmelzviskosität im Bereich von 1 Pa*s bis 1'000 Pa*s, vorzugsweise von 10 Pa*s bis 40 Pa*s auf bei einer Temperatur von 160°C. Die Schmelzviskosität ist hier und im Folgenden bestimmt gemäss DIN EN ISO 3219, Messmethode Kegel/Platte.
Die Klebstoffzusammensetzung kann insbesondere nachvernetzbar sein, insbesondere durch Einwirkung von UV-Strahlung.
Hierfür kann die chemisch vernetzbare Polymermatrix aus bestrahlungsinduziert vernetzten Prepolymeren gebildet sein. Geeignete Prepolymere sind hierbei in ihrem Molekulargewicht vorzugsweise derart ausgewählt, dass sie der resultierenden thermoplastischen Klebstoffzusammensetzung insbesondere nach der Vernetzung eine hohe Festigkeit bei Raumtemperatur verleihen (bis hin zur Duroplastizität), jedoch während der Verarbeitung der Schmelze eine für konventionelle hot-melt Auftragsvorrichtungen geeignete Viskosität verleihen. Typische Schmelzviskositäten sind hierbei die vorstehend genannten.

Gemäss einem im Rahmen der Erfindung besonders bevorzugten Ausführungsbeispiel werden als Prepolymere UV-vernetzende Acrylate in der Hot-melt Zusammensetzung eingesetzt. Durch Bestrahlung mit energiereichem Licht, insbesondere UV-Licht im Wellenlängenbereich von ca. 200 nm bis 450 nm, kann eine Vernetzung der Prepolymere bewirkt werden. Besonders bevorzugte UV-vernetzende Acrylat-Prepolymere sind solche der Produktfamilie acResin von der Firma BASF, wie bspw. acResin A 204 UV oder DS 3532. Auch Kombinationen solcher Polymere sind selbstverständlich möglich. Diese Substanzen zeichnen sich durch einpolymerisierte Monomere aus, an die unter Verwendung einer Spacergruppe UV-aktivierbare Photoinitiatorgruppen chemisch gebunden sind. Der Zusatz niedermolekularer Photoinitatoren ist somit zur Erzielung einer ausreichenden und raschen Vernetzung nicht notwendig. Selbstverständlich ist es im Rahmen der Erfindung ebenfalls möglich, übliche Photoinitiatoren in der Klebstoffzusammensetzung vorzusehen, welche ein beschleunigtes Einsetzen der Vernetzung des Prepolymers bewirken. Solchermassen geeignete Photoinitiatoren sind bspw. Acetophenon, Benzoinether, Benzyldialkylketole, oder deren Derivate. Der Gehalt an Photoinitiator ist typischerweise gering, vorzugsweise 0.05 bis 10 Gew.-Teile, besonders bevorzugt lediglich 0.1 bis 2 Gew.-Teile der Klebstoffzusammensetzung. Besonders bevorzugt kommen einpolymerisierte Photoinitiatoren zur Anwendung, bspw. ethylenisch ungesättigte Verbindungen mit einer Photoinitiatorgruppe, insbesondere in einem Anteil von 0.05 bis 10 Gew.%, bevorzugt von 0.1 bis 2 Gew.%, besonders bevorzugt von 0.1 bis 1 Gew.% der Klebstoffzusammensetzung. Derartige Verbindungen sind bspw. bekannt aus EP-A-346 734, EP-A-377 199 (Anspruch 1), DE-A-40 37 079 (Anspruch 1) oder DE-A-38 44 444 (Anspruch 1).
Im Rahmen der Erfindung einsetzbare, unter Einwirkung von UV-Strahlung nachvernetzbare Klebstoffe sind im Grundsatz bspw. beschrieben in WO2004/083302 (vorbehaltlich der dort nicht offenbarten thermischen
Farbumschläge). Derartige Zusammensetzungen enthalten ein schmelzfähiges, mit UV-Licht vernetzbares Polyacrylat und optional Additive, sowie mindestens eine oligomere Verbindung mit UVvernetzbaren funktionellen Gruppen, die mit dem Polyacrylat reaktionsfähig sind.
In weiteren Ausgestaltungen weist die erfindungsgemässe Klebstoffzusammensetzung Bestandteile auf, die ausgewählt sind aus den folgenden Kategorien:

### Elastomere

Gesättigte thermoplastische Polystyrolelastomere, kurz TPS-Elastomere, vorzugsweise: Styrol-Ethylen-Butylen-Copolymere, kurz SEB; Styrol-Ethylen-Propylen-Copolymere, kurz SEP; Styrol-Ethylen-Ethylen-Propylen-Copolymere, kurz SEEP; Styrol-Ethylen-Butylen-Styrol-Copolymere, kurz SEBS; Styrol-Ethylen-Propylen-Styrol-Copolymere, kurz SEPS; Styrol-Ethylen-Ethylen-Propylen-Styrol-Copolymere, kurz SEEPS; sowie Kombinationen hiervon; Ungesättigte thermoplastische TPS-Elastomere, vorzugsweise: Styrol-Butadien-Blockcopolymere, kurz SB; Styrol-Isopren-Blockcopolymere, kurz SI; Styrol-Butadien-Butylen-Blockcopolymere, kurz SBB; Styrol-Butadien-Isopren-Blockcopolymere, kurz SBI; Styrol-Butadien-Styrol-Blockcopolymere, kurz SBS; Styrol-Butadien-Butylen-Styrol-Blockcopolymere, kurz SBBS; Styrol-Isopren-Styrol-Blockcopolymere, kurz SIS; Styrol-Butadien-Isopren-Styrol-Blockcopolymere, kurz SBIS; sowie Kombinationen hiervon.

### Klebe-Harze

Aliphatische, cycloaliphatische und aromatische Kohlenwasserstoff-basierte Harze; Kolophoniumharz(-ester); Terpen-basierte Harze (auch phenolisch); Tall-Öl; inbesondere hydrierte Pentaerythrolharze; insbesondere hydrierte Glyzerinharze; Hydroabietylharze; Olefinharze; Pinenharze; α-Methylstyrolhzarze; Styrolharze; Cumaren-Indenharze; Melaminharze; Polyethyleniminharze; Cumaronharze; sowie Kombinationen hiervon.

### Weichmacher

Phthalate; Adipate; Citrate; Phosphate; Trimellitsäure; Sulfonsäure; raffinierte Naphthalinöle; Weiss-Öle, Polybutylen-Polyisobutylen Copolymere; Alkylester von Cyclohexandicarbonsäure und Adipinsäure; Acrylatweichharze, insbesondere Poly-n-Butylacrylat; Polyvinylmethylether; und Mischungen davon.

### Stabilisatoren

Sterisch gehinderte Phenole (insbesondere Irganox® Typen des Herstellers BASF, wie bspw. sterisch gehinderte Phenole als Rest an Phosphiten (bspw. Irgafos® Typen des Herstellers BASF)); sterisch gehinderte Lactone (insbesondere Irganox® Typen des Herstellers BASF, wie bspw. Irganox® HP-136); sterisch gehinderte Amine; sowie Kombinationen hiervon.

### Vernetzer

Metallsalze, vorzugsweise Zinkacetat, Magnesiumacetat oder Zirkoniumsalzen; Aziridine, Glyoxalate; Triethylenglykoldiviny-lether; Acetylacetonate; sowie Kombinationen hiervon.

Erfindungsgemässe thermoplastische Klebstoffzusammensetzungen können in 100 Gew.% Gesamtzusammensetzung vorzugsweise enthalten:
- 20 bis 80 Gew.% (insbesondere 20-45 Gew.%) eines oder mehrerer Blockcopolymere, inbesondere wie vorstehend genannt;
- 5 bis 80 Gew.% (insbesondere 20-60 Gew.%) eines oder mehrerer Klebe-Harze, insbesondere wie vorstehend genannt;
- 0 bis 60 Gew.% (insbesondere 0,1-50 Gew.%, weiter insbesondere 20-40 Gew.%) eines Weichmachers, insbesondere wie vorstehend genannt; und
- optional: 0,1 bis 5 Gew.% (insbesondere 1 bis 3 Gew.%) eines Vernetzers, insbesondere wie vorstehend genannt;
- optional: 0,1 bis 5 Gew.% (insbesondere 0,5 bis 2 Gew.%) eines Stabilisators, insbesondere wie vorstehend genannt.

Sowohl der erste als auch der zweite Farbumschlag der Klebstoffzusammensetzung kann reversibel sein. Falls der/die Farbumschläge reversibel ist/sind, so müssen bei sicherheitsrelevanten Anwendungen geeignete Vorkehrungen getroffen werden, um die spätere Erkennbarkeit von ehemals erreichten Farbumschlägen zu gewährleisten. Dies geschieht im Rahmen der Erfindung derart, dass für den ersten und den zweiten Farbumschlag ein Farbbildnersystem benützt wird, welches eine temperaturabhängige, reversible Farbänderung aufweist, wobei diese Farbänderung jedoch einen Memory-Effekt aufweist. Die Farbänderung ist somit zwar reversibel, weist jedoch eine Hysterese auf, die einen möglichst weiten Temperaturbereich überstreicht.

Bevorzugte Temperaturen T₁ und/oder T₂ sind im Rahmen der Erfindung die folgenden:
- Temperatur T₁: im Bereich von +40°C bis +90°C; insbesondere +50°C bis +90°C, oder +40°C bis +80°C, oder +60°C bis +90°C, oder +40°C bis +70°C, oder +70°C bis +90°C, +40°C bis +60°C;
- Temperatur T₂: im Bereich von -45°C bis -5°C; insbesondere -35°C bis -5°C, oder -45°C bis -15°C, oder -25°C bis -5°C, oder -45°C bis -25°C;
sowie sämtliche Kombinationen dieser Temperaturen T₁ und T₂, angepasst an die jeweiligen praktischen Anforderungen. Werden derartige Kombinationen T₁ und T₂ von der Hysterese eines reversiblen Farbwechsels umfasst, ergeben sich im Rahmen der Erfindung vielfältige Möglichkeiten, mit einfachen Mittel sehr flexibel einsetzbare Klebstoffzusammensetzungen zu erhalten. So kann bspw. ein System bereitgestellt werden mit einem reversiblen Farbumschlag, der bspw. eine Hysterese im Bereich von -14°C bis 74°C überstreicht und bei tiefen Temperaturen eine blaue Farbe aufweist, bei hohen Temperaturen hingegen im Wesentlichen farblos ist. Wird dieses System bei RT im blauen Zustand bereitgestellt, so verschwindet diese blaue Farbe erst bei einer Temperatur von 74°C, behält diese jedoch auch bei beliebig tiefen Temperaturen bei. Ist die blaue Farbe also verschwunden, so bedeutet dies, dass die Klebstoffzusammensetzung einer Temperatur von 74°C oder mehr ausgesetzt war. Um eine vollständige Manipulatiossicherheit zu ermöglichen, muss nur noch sichergestellt werden, dass ein Überschreiten der Temperatur von 74°C nicht dadurch kaschiert werden kann, dass anschliessend die blaue Farbe wieder eingestellt wird, indem auf eine Temperatur von -14°C oder weniger abgekühlt wurde. Hierfür genügt es, einen weiteren Indikator vorzusehen, der bei einer Temperatur von -14°C oder wärmer, jedoch deutlich unterhalb von RT (vorzugsweise) irreversibel anschlägt, vorzugsweise eine Farbänderung aufweist.

Alternativ ist es möglich, das gleiche System bei RT im farblosen Zustand bereitzustellen. Es bleibt farblos auch bei beliebig hohen Temperaturen, jedoch tritt eine Farbänderung zu blau bei einer Temperatur von -14°C ein. Um eine vollständige Manipulatiossicherheit zu ermöglichen, muss nun nur noch sichergestellt werden, dass ein Unterschreiten der Temperatur von -14°C nicht dadurch kaschiert werden kann, dass anschliessend die Farblosigkeit wiederhergestellt wird, indem auf eine Temperatur von 74°C oder mehr erhitzt wird. Hierfür genügt es, einen weiteren Indikator vorzusehen, der bei einer Temperatur (deutlich) oberhalb von RT, jedoch bei weniger als 74°C irreversibel anschlägt, vorzugsweise eine Farbänderung aufweist.
Es ist ersichtlich, dass hierdurch eine grosse Flexibilität bei der Bereitstellung verschiedenster Farbumschlagsysteme gegeben ist, die nicht mehr nur an die wenigen verfügbaren, irreversibel umschlagenden Farbkennzeichnungen gebunden ist.
Bevorzugt ist die Klebstoffzusammensetzung derart beschaffen, dass nur der erste Farbumschlag, oder nur der zweite Farbumschlag, oder - ganz besonders bevorzugt - sowohl der erste als auch der zweite Farbumschlag durch ein verkapseltes Farbpigment oder mehrere verkapselte Farbbildner bewirkt wird/ werden.
Im Rahmen der Erfindung nutzbare, verkapselte Farbbildner sind als solche bekannt bspw. aus EP 2 431 444 A1, jedoch nicht zur Verwendung
in erfindungsgemässen Klebstoffzusammensetzungen.
Ein oder mehrere eingesetzte Farbbildner der Klebstoffzusammensetzung können ausgewählt sein aus der Gruppe bestehend aus Triphenylmethan-Verbindungen, Fluoran-Verbindungen, Phenothiazin-Verbindungen, Indolylphthalido-Verbindungen, Leucoauramin-Verbindungen, Spiropyran-Verbindungen, Rhodaminlactam-Verbindungen, Azaphthalid-Verbindungen, Benzoxazin-Verbindungen, Diphenylmethane phthalides, Phenylindolyl phthalides, Indolyl phthalides, Diphenylmethane azaphthalides, Phenylindolyl azaphthalides, Fluorans, Styrylquinolines, diazarhodamine lactones.
Besonders bevorzugt sind die in Absatz [0013] von DE 42 23 976 A1 und
Absatz [0012] von EP 2 431 444 A1 genannten Verbindungen. Kombinationen der vorgenannten Farbbildner sind selbstverständlich möglich, insbesondere auch zur Erzeugung von Mischfarben.
Ein oder mehrere der eingesetzten Farbpigmente der Klebstoffzusammensetzung können mit einem Entwickler verkapselt sein, wobei der Entwickler ausgewählt ist aus der Gruppe bestehend aus- Verbindungen der Formel (I) 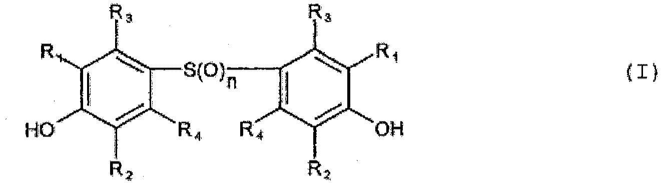 worin R₁ und R₂ jeweils ein Wasserstoffatom, einen Alkylrest mit 1 bis 3 Kohlenstoffatomen oder einen halogenierten Alkylrest mit 1 bis 3 Kohlenstoffatomen, einen Hydroxylrest, einen Cyclohexylrest oder einen Phenylrest darstellen (aber, wenn einer von R₁ und R₂ entweder Cyclohexyl oder Phenyl-Rest ist, dann ist der andere ein Wasserstoffatom), R₃ und R₄ jeweils ein Wasserstoffatom, einen Alkylrest mit 1 bis 15 Kohlenstoffatomen, einen halogenierten Alkylrest mit 1 bis 15 Kohlenstoffatomen, einen Hydroxylrest, einen Cyclohexylrest oder einen Phenylrest darstellen, wobei zwei der R₁ bis R₄ miteinander identisch oder unterschiedlich sein können, jedoch nicht alle der R₁ bis R₄ Wasserstoffatome sein können, n eine ganze Zahl von 0, 1 oder 2 darstellt;- Verbindungen der Formel (II) 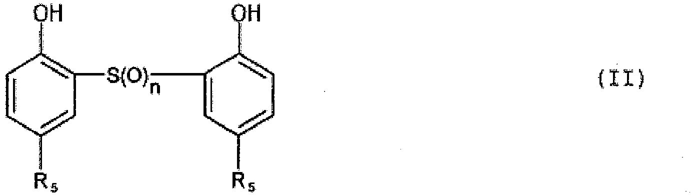 worin R₅ einen Alkylrest mit 1 bis 12 Kohlenstoffatomen, einen Cyclohexylrest mit 3 bis 10 Kohlenstoffatomen, einen Aralkyl- mit 7 bis 10 Kohlenstoffatomen oder einen Phenyl-rest darstellt, wobei zwei R₅ entweder identisch zueinander oder unterschiedlich voneinander sein können, und n eine ganze Zahl von 0, 1 oder 2 ist;- Bisphenol A;- die in den Absätzen [0013] und [0014] von EP 2 431 444 A1 genannten Verbindungen.
Selbstverständlich können auch Kombinationen der genannten Entwickler genutzt werden, insbesondere falls mehrere Farbbildner eingesetzt werden.
Einzelne oder mehrere Farbbildner der Klebstoffzusammensetzung werden bevorzugt gemeinsam mit einem geeigneten Entwickler und einem Matrixmaterial in einem Material verkapselt, wobei das Matrixmaterial ausgewählt ist aus der Gruppe bestehend aus Alkoholen, insbesondere Stearylalkohol; Ethern; Ketonen; Carbonsäuren; Säureamiden; Estern, insbesondere solche der Formel (III) 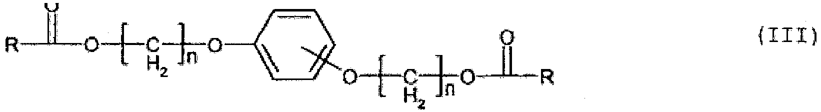 worin R eine Alkyl- oder Alkenylgruppe mit 1 bis 21 Kohlenstoffatomen bedeutet, wobei beide R gleich oder unterschiedlich sein können, und wobei n eine Zahl 1, 2 oder 3 ist; sowie Kombinationen hiervon.
Die Verkapselung kann mit Verfahren und in Hüllmaterialien erfolgen wie in
DE 42 23 976 A1 und EP 2 431 444 A1 beschrieben.
Die Klebstoffzusammensetzung zeigt mindestens einen weiteren Farbumschlag bei- einer Erhöhung der Umgebungstemperatur auf eine Temperatur ≥ T₃, wobei T₃ ≤ T₁ jedoch grösser als 20°C (vorzugsweise > 30°C, besonders bevorzugt > 40°C) ist und wobei dieser weitere Farbumschlag irreversibel ist; und/oder-einer Erniedrigung der Umgebungstemperatur auf eine Temperatur ≤ T₄, wobei T₄ ≥ T₂ jedoch kleiner als 20°C (vorzugsweise < 0°C, besonders bevorzugt < -10°C) ist und wobei dieser weitere Farbumschlag irreversibel ist.
Die vorgenannten, weiteren Farbumschläge der
Klebstoffzusammensetzung können durch die vorstehend bereits genannten Farbbildner erzielt werden.
Ein weiterer Aspekt der Erfindung betrifft ein System insbesondere zur Herstellung einer thermische Farbumschläge zeigenden Klebstoffzusammensetzung. Das System umfasst als separat, jedoch zur bestimmungsgemäss gemeinsamen Nutzung bereitgestellte Komponenten
i) eine insbesondere thermoplastische Klebstoffzusammensetzung oder Bestandteile zu ihrer Herstellung, wie hierin beschrieben;
ii) ein oder mehrere verkapselte Farbbildner aufweisend einen Memory-Effekt, wie hierin beschrieben, welche
   - einen ersten reversiblen Farbumschlag bei einer Erhöhung der Umgebungstemperatur auf eine Temperatur ≥ T₁ zeigt, und
   - einen zweiten reversiblen Farbumschlag bei einer Erniedrigung der Umgebungstemperatur auf eine Temperatur ≤ T₂ zeigt, wobei T₁ > T₂ ist;
iii) eine Komponente, wie hierin beschrieben, welche einen weiteren Farbumschlag zeigt bei
   - einer Erhöhung der Umgebungstemperatur auf eine Temperatur ≥ T₃, wobei T₃ ≤ T₁ jedoch grösser als 20°C, vorzugsweise > 30°C, besonders bevorzugt > 40°C ist und wobei dieser weitere Farbumschlag irreversibel ist; und/oder
   - einer Erniedrigung der Umgebungstemperatur auf eine Temperatur ≤ T₄, wobei T₄ ≥ T₂ jedoch kleiner als 20°C (vorzugsweise < 0°C, besonders bevorzugt < -10°C) ist und wobei dieser weitere Farbumschlag irreversibel ist;
iv) Instruktionen zur bestimmungsgemässen gemeinsamen Verwendung der Komponenten i) und ii), insbesondere der Komponenten i) bis iii).
Eine Verwendung eines Systems kann dadurch erfolgen, dass Komponente i) und Komponente ii) sowie ggf. die optionale Komponente iii) vermischt und dann als eine thermische Farbumschläge zeigende Klebstoffzusammensetzung auf ein Substrat appliziert werden; oder dass Komponente i) und Komponente ii) im Wesentlichen getrennt voneinander auf ein Substrat aufgetragen werden, wobei Komponente ii) und ggf. Komponente iii) jedoch in räumlicher Nähe, bevorzugt unmittelbar angrenzend an Komponente i) aufgetragen wird; besonders bevorzugt wird Komponente ii) und ggf. Komponente iii) mit Komponente i) überschichtet.

Verwendung finden die beschriebenen Klebstoffzusammensetzungen und/oder Systeme zur Visualisierung von Temperaturschwankungen auf/bei Klebefilmen; in Lösemittel-basierten, insbesondere vernetzenden Klebstoffen und Beschichtungsmitteln; in wässrigen, insbesondere vernetzenden Klebstoffen und Beschichtungsmitteln; in Ein-Komponenten-Klebstoffen; in Zwei-Komponenten-Klebstoffen; in transparenten Etiketten; in transparenten Verpackungsmitteln, insbesondere Nahrungsmittelverpackungen für Kälte- und/oder Wärme-empfindliche Waren.
Erfindungsgemäss kann die Verwendung des Systems ermöglichen, das Erreichen von vorbestimmten Grenztemperaturen per Farbumschlag zu dokumentieren. Insbesondere können farbliche Kennzeichnungen langfristig erhalten bleiben und somit Aufschluss über Manipulationen an Waren, insbesondere Klebestellen, oder unterbrochene Kühl- und/oder Wärmeketten geben.
Die Offenbarung wird nachfolgend anhand von Ausführungsbeispielen und
Figuren näher erläutert, ohne dass der Gegenstand der Offenbarung auf
diese Ausführungsformen zu beschränken wäre.
Figur 1:Hysterese-Effekt eines thermochromen Pigments (schematisch)
Figur 2:Klebstoff mit eingebetteten und überschichteten, verkapselten

### Farbbildnern (schematisch)

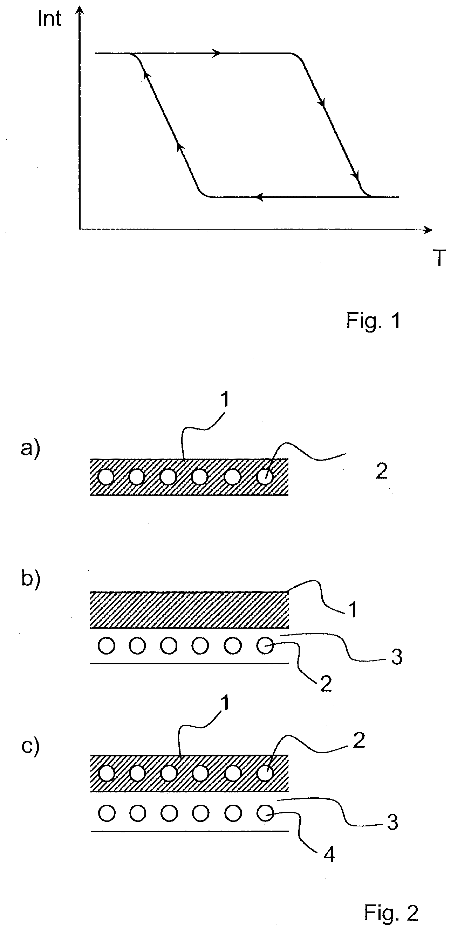

Figur 1 zeigt schematisch den Hysterese-Effekt eines einsetzbaren,
thermochromen Farbbildners, wie vorstehend erläutert.

Figur 2 zeigt verschiedenste Ausführungsarten der Offenbarung:
In Fig. 2 a) ist in eine Schicht 1 (bspw. einen Klebstoff) die Einbettung eines verkapselten Farbsystems 2 enthaltend wenigstens einen Farbbildner, wenigstens einen Entwickler und eine geeignete Matrix gezeigt, wie vorstehend erläutert. Die Klebstoffzusammensetzung umfasst die Kapseln enthaltend die Farbpigmente und kann auf ein Material, insbesondere eine Klebestelle aufgetragen werden.
In Fig. 2 b) ist eine schichtweise Anordnung erläutert. Dieses kann bspw. durch die Schritte (1.) Auftragen einer ersten Schicht 3 (die nicht zwingend ein Klebstoff sein muss) umfassend ein verkapseltes Farbsystem 2 wie vorstehend beschrieben, auf ein Material; und (2.) Auftragen einer zweiten Schicht (hier: einer Deckschicht 1) auf die bereits aufgetragene erste Schicht 3. Auch bei der zweiten Schicht / Deckschicht 1 muss es sich nicht zwingend um einen Klebstoff handeln. Insbesondere sind auch
   Anwendungen der Offenbarung möglich, die nicht zwingend eine Verklebung bedingen, wie nachstehend noch erläutert wird.
In Fig. 2 c) ist eine weitere schichtweise Anordnung erläutert, wobei in der ersten Schicht 1 ein verkapseltes Farbsystem enthalten ist, wie bereits im Zusammenhang mit Fig. 2 a) vorstehend erläutert. In einer weiteren Schicht 3 ist ein weiteres Farbsystem 4 enthalten, das einen zusätzlich zu den Farbumschlägen bei T₁ und T₂ noch mindestens einen weiteren Farbumschlag bei T₃ und/oder T₄ zeigt, wie vorstehend bereits erläutert.

Es versteht sich, dass die Auftragsbedingungen an die Farbumschlagsbedingungen angepasst sein müssen. Bei hot-melt Auftragsverfahren dürfen irreversible Farbumschlagstemperaturen selbstverständlich nicht erreicht/überschritten werden. Gegebenenfalls sind Dispersionen oder lösungsmittelbasierte Systeme zu wählen,
um bestimmte Schichten aufzutragen, die solche Farbsysteme enthalten. Geeignete Auftragsverfahren wählt der Fachmann in Routineversuchen.

### BEISPIEL 1

Formulierungen Acrylat-basiert, UV-vernetzbar:

| | Formulierung #1 | Formulierung #2 |
|---|---|---|
| acResin A204 (BASF SE) | 99,7 Gew.% | 87,7 Gew.% |
| Irganox B 612 (BASF SE) | 0,3 Gew.% | 0,3 Gew.% |
| Farbsystem* | 0 Gew.% | 12,0 Gew.% |

| | | |
|---|---|---|
| * Das eingesetzte Farbsystem enthält ca. 1/3 Farbpigmente, entsprechend 4 Gew.% (bezogen auf die Gesamtzusammensetzung). | | |

### Klebeprüfungen

Trägermaterial: PET Mylar 50µm
Beschichtungsgewicht: 25 g/m², direkt beschichtet;
Vernetzung: 20 mJ/cm² IST UV Minicure, H-Lampe, 120 W/cm (9.5 A)

| | **#1** | **#2** |
|---|---|---|
| **180°-Schälfestigkeit auf Stahl** | 11 | 8.4 AB |
| nach 24 h [N/25 mm]; PSTC 101 | | |
| **Schertemperatur auf Stahl bei 70°C** | > 100 | > 100 |
| 1000 g / 25x25 mm / nach Verklebung 24h klimatisiert, Wert in min.; PSTC 107 | | |
| **Schertemperatur auf Stahl (SAFT)** | > 90 | > 90 |
| 0,5°C/min. / 1000 g / 25x25 mm / nach Verklebung 24h klimatisiert, Wert in °C | | |

| | | |
|---|---|---|
| AB: Adhäsionsbruch | | |

Die Angabe *"PSTC"* bezieht sich im Rahmen dieser Anmeldung stets auf "Test Methods for Pressure Sensitive Adhesive Tapes, 15th Edition (2007*)*"*.*

Die Angabe "*klimatisiert*" bezieht sich im Rahmen dieser Anmeldung stets auf 23°C und 50% rF.

### BEISPIEL 2

Formulierungen #3 und #4:

| | **#3** | **#4** |
|---|---|---|
| TER SIS 1209 (TER HELL & CO GMBH) | 40 Gew.% | 34,8 Gew.% |
| Suzkorez SU 90 (KOLON Industries, Inc.) | 46 Gew.% | 40,0 Gew.% |
| Edelex 946 (Shell Group) | 13 Gew.% | 11,3 Gew.% |
| Irganox B225 (BASF SE) | 1 Gew.% | 1,0 Gew.% |
| Farbsystem (wie Beispiel 1; s.o.) | - | 12 Gew.% |

### Klebeprüfungen

Trägermaterial: BOPP 40µm
Gegebenes Beschichtungsgewicht: 25 g/m²

| | **#3** | **#4** |
|---|---|---|
| **180°-Schälfestigkeit auf Stahl** | 11.8 AB | 9.1 AB |
| nach 24 h [N/25 mm]; PSTC 101 | | |
| **Scherfestigkeit auf Stahl bei 23°C** | > 4'400 | > 4'400 |
| 500 g / 12,5x12,5 mm / min.; PSTC 107 | | |
| **Schertemperatur auf Stahl (SAFT)** | 69 KB / 1xAB | 71 KB/D |
| 0,5°C/min. / 1000 g / 12,5x25 mm / nach Verklebung 24h klimatisiert, Mittelwert aus 6 Versuchen, Wert in °C | | |

| | | |
|---|---|---|
| AB: Adhäsionsbruch, KB : Kohäsionsbruch, D: Dunst | | |

Zwar beeinflusst die Zugabe des Farbsystems die klebtechnischen Eigenschaften (siehe Zusammensetzungen #2 im Vergleich zu #1 und #4 im Vergleich zu #3), dies jedoch nur signifikant bei der 180° Schälfestigkeit und dies auch nur in geringem Masse. Für viele Anwendungen sind die erzielbaren Schälfestigkeitswerte nach wie vor völlig ausreichend.

### VERWENDUNG DER FORMULIERUNGEN #2 UND #4

Beispiele für die Verwendung der erfindungsgemässen Zusammensetzungen #2 und #4 sind die Verwendung als Kälteindikator bei Sicherheitsbeuteln (Duty Free, Geldtaschen, etc.).

Eine mit einem üblichen Klebstoff versiegelte Tasche lässt sich durch Hitze (wenn also der Klebstoff ggf. aufschmilzt) oder durch Kälte (wenn die Glasübergangstemperatur des Klebstoffs unterschritten und der Klebstoff also brüchig wird und die Adhäsion verliert) derart manipulieren, dass ein Öffnen und Verändern des Beutelinhalts möglich wird, ohne dass die Manipulation im Nachhinein sichtbar wäre. D.h., die Tasche liesse sich wieder verkleben und ist bei Raumtemperatur später wieder im gleichen Zustand wie vor der Manipulation.

Eine mit einem erfindungsgemässen Farbsystem #2 oder #4 versiegelte Tasche zeigt ein anderes Verhalten:
Die Klebestelle wird mit einem Eisspray abgekühlt. Die Adhäsion schwindet und die Tasche kann geöffnet werden. Jedoch wird ein Farbumschlag sichtbar, wodurch die Manipulation angezeigt wird. Durch Erhitzen auf über 70°C kann der Farbumschlag des thermochromen Farbsystems zwar wieder rückgängig gemacht werden. Jedoch wird durch das (irreversible) Umschlagen eines weiteren Farbindikators bei einer Temparatur deutlich oberhalb von Raumtemperatur, jedoch noch unter 70°C, verhindert, dass die Manipulation später überhaupt nicht mehr nachvollziehbar ist. Das Gesamtsystem wird die Manipulation stets zuverlässig anzeigen.

Insbesondere sind auch Anwendungen der Erfindung möglich, bei denen es nicht zwingend auf eine Verklebung von Materialien ankommt. Beispielsweise sind Siegelfolien herstellbar, bei welchen die erfindungsgemässen Farbsysteme nur in einem Teilbereich vorhanden sind. So können bei Unter- / oder Überschreiten der Grenztemperaturen nicht nur vollflächige Farben, sondern bspw. auch Muster oder Schriftzeichen zur Erscheinung gebracht werden. Derartige Ausführungsformen sind besonders einfach mit einem mehrschichtigen Aufbau zu realisieren, wobei in einer unteren Schicht, die nur in Teilbereichen (dem Muster / der Schrift entsprechend) ein Farbsystem aufgetragen wird. Dieses Farbsystem wird anschliessend mit einer (insbesondere vollflächigen Deckschicht abgedeckt. Aufgrund der Tatsache, dass die untere Schicht nur in Teilbereichen aufgetragen wird, hat auch die Deckschicht in den verbleibenden Bereichen Kontakt zum Substrat. Dies ist insbesondere dann vorteilhaft, wenn es sich bei der Deckschicht um einen Klebstoff handelt. Dieser Klebstoff kann dann in den Kontaktbereichen zum Substrat seine volle Klebkraft entfalten. Auf diese Art und Weise können Verbindungen erzielt werden, die im Wesentlichen die gewohnt sehr guten Klebeeigenschaften aufweisen, da das Farbsystem nur in wenigen Teilbereichen aufgetragen wurde (was sehr häufig ausreichend ist).

## Patentansprüche

1. Kunststoffzusammensetzung, insbesondere Klebstoffzusammensetzung, welche wenigstens einen reversiblen Farbbildner aufweisend einen Memory-Effekt umfasst, durch welchen
- ein erster Farbumschlag bei einer Erhöhung der Umgebungstemperatur auf eine Temperatur ≥ T₁ anzeigbar ist;
- ein zweiter Farbumschlag bei einer Erniedrigung der Umgebungstemperatur auf eine Temperatur ≤ T₂ anzeigbar ist;
wobei T₁ > T₂ ist; und welche
mindestens einen weiteren Farbumschlag zeigt bei
- einer Erhöhung der Umgebungstemperatur auf eine Temperatur ≥ T₃, wobei T₃ ≤ T₁ jedoch grösser als 20°C, vorzugsweise grösser als 30°C, besonders bevorzugt grösser als 40°C, ist und wobei dieser weitere Farbumschlag irreversibel ist; und/oder
- einer Erniedrigung der Umgebungstemperatur auf eine Temperatur ≤ T₄, wobei T₄ ≥ T₂ jedoch kleiner als 20°C, vorzugsweise kleiner als 0°C, besonders bevorzugt kleiner als -10°C, ist und wobei dieser weitere Farbumschlag irreversibel ist.

2. Zusammensetzung gemäss Anspruch 1, **dadurch gekennzeichnet, dass**
- es sich um eine thermoplastische Zusammensetzung handelt, insbesondere mit einer Schmelzviskosität bei einer Temperatur von 160°C im Bereich von 1 Pa*s bis 1'000 Pa*s, vorzugsweise von 10 Pa*s bis 40 Pa*s, bestimmt gemäss DIN EN ISO 3219, Messmethode Kegel/Platte; oder
- es sich um eine lösungsmittelbasierte Zusammensetzung oder eine Dispersion handelt.

3. Zusammensetzung gemäss einem der Ansprüche 1 oder 2, **dadurch gekennzeichnet, dass** sie bei bestimmungsgemässem Gebrauch eine 180° Schälfestigkeit auf Stahl von mehr als 5 N/25mm aufweist, vorzugsweise von mehr als 6,25 N/25mm, besonders bevorzugt von mehr als 7,5 N/25mm, jeweils gemessen gemäss Messmethode 101 der PSTC "*Test Methods for Pressure Sensitive Adhesive Tapes",* 15^{th} Ed. (2007).

4. Zusammensetzung gemäss einem der Ansprüch 1 bis 3, **dadurch gekennzeichnet, dass** sie nachvernetzbar ist, insbesondere durch Einwirkung von UV-Strahlung.

5. Zusammensetzung gemäss einem der Ansprüche 1 bis 4, aufweisend Bestandteile ausgewählt, alleine oder in Kombination, aus der Gruppe bestehend aus
- Elastomeren, insbesondere
i) gesättigten thermoplastischen Polystyrolelastomeren, kurz TPS-Elastomeren, vorzugsweise: Styrol-Ethylen-Butylen-Copolymeren, kurz SEB; Styrol-Ethylen-Propylen-Copolymeren, kurz SEP; Styrol-Ethylen-Ethylen-Propylen-Copolymeren, kurz SEEP; Styrol-Ethylen-Butylen-Styrol-Copolymeren, kurz SEBS; Styrol-Ethylen-Propylen-Styrol-Copolymeren, kurz SEPS; Styrol-Ethylen-Ethylen-Propylen-Styrol-Copolymeren, kurz SEEPS; sowie Kombinationen hiervon;
ii) ungesättigten thermoplastischen TPS-Elastomeren, vorzugsweise:
Styrol-Butadien-Blockcopolymeren, kurz SB; Styrol-Isopren-Blockcopolymeren, kurz SI; Styrol-Butadien-Butylen-Blockcopolymeren, kurz SBB; Styrol-Butadien-Isopren-Blockcopolymeren, kurz SBI; Styrol-Butadien-Styrol-Blockcopolymeren, kurz SBS; Styrol-Butadien-Butylen-Styrol-Blockcopolymeren, kurz SBBS; Styrol-Isopren-Styrol-Blockcopolymeren, kurz SIS; Styrol-Butadien-Isopren-Styrol-Blockcopolymeren, kurz SBIS; sowie Kombinationen hiervon;
- Klebe-Harzen, insbesondere: Aliphatische, cycloaliphatische und aromatische Kohlenwasserstoffbasierte Harze; Kolophoniumharz(-ester); Terpen-basierte Harze (auch phenolisch); Tall-Öl; inbesondere hydrierte Pentaerythrolharze; insbesondere hydrierte Glyzerinharze; Hydroabietylharze; Olefinharze; Pinenharze; α-Methylstyrolhzarze; Styrolharze; Cumaren-Indenharze; Melaminharze; Polyethyleniminharze; Cumaronharze; sowie Kombinationen hiervon;
- Weichmachern, insbesondere: Phthalate; Adipate; Citrate; Phosphate; Trimellitsäure; Sulfonsäure; raffinierte Naphthalinöle; Weiss-Öle, Polybutylen-Polyisobutylen Copolymere; Alkylester von Cyclohexandicarbonsäure und Adipinsäure; Acrylatweichharze, insbesondere Poly-n-Butylacrylat; Polyvinylmethylether; und Mischungen davon;
- Stabilisatoren, insbesondere: Sterisch gehinderte Phenole, insbesondere als Rest an Phosphiten; sterisch gehinderte Lactone; sterisch gehinderte Amine; sowie Kombinationen hiervon;
- Vernetzern, insbesondere: Metallsalze, vorzugsweise Zinkacetat, Magnesiumacetat oder Zirkoniumsalzen; Aziridine, Glyoxalate; Triethylenglykoldiviny-lether; Acetylacetonate; sowie Kombinationen hiervon.

6. Zusammensetzung gemäss einem der Ansprüche 1 bis 4, **dadurch gekennzeichnet, dass** sowohl der erste als auch der zweite Farbumschlag reversibel ist.

7. Zusammensetzung gemäss einem der Ansprüche 1 bis 6, **dadurch gekennzeichnet, dass**
i) nur der erste Farbumschlag; oder
ii) nur der zweite Farbumschlag; oder
iii) sowohl der erste als auch der zweite Farbumschlag; durch ein oder mehrere verkapselte(s) Farbbildner bewirkt wird/werden.

8. Zusammensetzung gemäss Anspruch 7, **dadurch gekennzeichnet, dass** das/die Farbbildner ausgewählt ist/sind aus der Gruppe bestehend aus Triphenylmethan-Verbindungen, Fluoran-Verbindungen, Phenothiazin-Verbindungen, Indolylphthalido-Verbindungen, Leucoauramin-Verbindungen, Spiropyran-Verbindungen, Rhodaminlactam-Verbindungen, Azaphthalid-Verbindungen, Benzoxazin-Verbindungen, Diphenylmethane phthalides, Phenylindolyl phthalides, Indolyl phthalides, Diphenylmethane azaphthalides, Phenylindolyl azaphthalides, Fluorans, Styrylquinolines, diazarhodamine lactones.

9. Zusammensetzung gemäss einem der Ansprüche 7 bis 8, **dadurch gekennzeichnet, dass** das/die Farbbildner gemeinsam mit einem Entwickler verkapselt ist/sind, wobei der Entwickler ausgewählt ist aus der Gruppe bestehend aus
- Verbindungen der Formel (I) 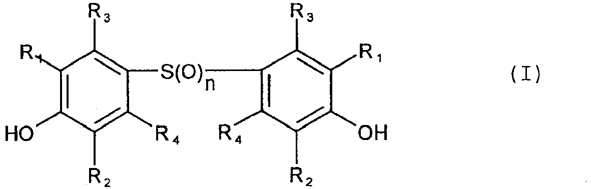 worin R₁ und R₂ jeweils ein Wasserstoffatom, einen Alkylrest mit 1 bis 3 Kohlenstoffatomen oder einen halogenierten Alkylrest mit 1 bis 3 Kohlenstoffatomen, einen Hydroxylrest, einen Cyclohexylrest oder einen Phenylrest darstellen (aber, wenn einer von R₁ und R₂ entweder Cyclohexyloder Phenyl-Rest ist, dann ist der andere ein Wasserstoffatom), R₃ und R₄ jeweils ein Wasserstoffatom, einen Alkylrest mit 1 bis 15 Kohlenstoffatomen, einen halogenierten Alkylrest mit 1 bis 15 Kohlenstoffatomen, einen Hydroxylrest, einen Cyclohexylrest oder einen Phenylrest darstellen, wobei zwei der R₁ bis R₄ miteinander identisch oder unterschiedlich sein können, jedoch nicht alle der R₁ bis R₄ Wasserstoffatome sein können, n eine ganze Zahl von 0, 1 oder 2 darstellt;
- Verbindungen der Formel (II) 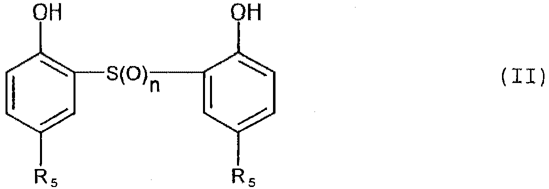 worin R₅ einen Alkylrest mit 1 bis 12 Kohlenstoffato-men, einen Cyclohexylrest mit 3 bis 10 Kohlenstoffatomen, einen Aralkyl- mit 7 bis 10 Kohlenstoffatomen oder einen Phenylrest darstellt, wobei zwei R₅ entweder identisch zueinander oder unterschiedlich voneinander sein können, und n eine ganze Zahl von 0, 1 oder 2 ist;
- Bisphenol A;
sowie Kombinationen hiervon.

10. Zusammensetzung gemäss einem der Ansprüche 7 bis 9, **dadurch gekennzeichnet, dass** der/die Farbbildner gemeinsam mit einem Matrixmaterial verkapselt ist/sind, wobei das Matrixmaterial ausgewählt ist aus der Gruppe bestehend aus Alkoholen, insbesondere Stearylalkohol; Ethern; Ketonen; Carbonsäuren; Säureamiden; Estern, insbesondere solche der Formel (III) 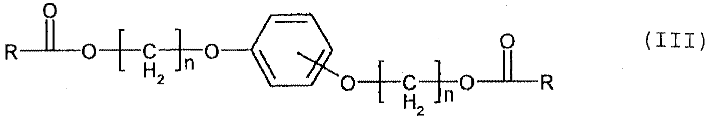 worin R eine Alkyl- oder Alkenylgruppe mit 1 bis 21 Kohlenstoffatomen bedeutet, wobei beide R gleich oder unterschiedlich sein können, und wobei n eine Zahl 1, 2 oder 3 ist; sowie Kombinationen hiervon.

11. Zusammensetzung gemäss einem der Ansprüche 1 bis 10, **dadurch gekennzeichnet, dass** der dritte Farbumschlag durch Farbbildner bewirkt wird die ausgewählt sind aus der Gruppe bestehend aus Triphenylmethan-Verbindungen; Fluoran-Verbindungen; Phenothiazin-Verbindungen; Indolylphthalido-Verbindungen; Leucoauramin-Verbindungen; Spiropyran-Verbindungen; Rhodaminlactam-Verbindungen; Azaphthalid-Verbindungen; Benzoxazin-Verbindungen; Diphenylmethane phthalides; Phenylindolyl phthalides; Indolyl phthalides; Diphenylmethane azaphthalides; Phenylindolyl azaphthalides; Fluorans; Styrylquinolines; diazarhodamine lactones; sowie Mischungen davon.

12. System zur Herstellung einer thermische Farbumschläge zeigenden Kunststoffzusammensetzung, inbesondere Klebstoffzusammensetzung, gemäss einem der Ansprüche 1 bis 11, umfassend als separat, jedoch zur bestimmungsgemäss gemeinsamen Nutzung bereitgestellte Komponenten
i) eine
- insbesondere thermoplastische Kunststoffzusammensetzung, insbesondere Klebstoffzusammensetzung, oder Bestandteile zu ihrer Herstellung; oder
- eine lösungsmittelbasierte Kunststoffzusammensetzung, insbesondere Klebstoffzusammensetzung, oder Bestandteile zu ihrer Herstellung; oder
- eine Kunststoff-Dispersion, insbesondere einen Dispersionsklebstoff, oder Bestandteile zu ihrer Herstellung;
ii) ein oder mehrere verkapselte Farbbildner aufweisend einen Memory-Effekt, welche(s)
- einen ersten, reversiblen Farbumschlag bei einer Erhöhung der Umgebungstemperatur auf eine Temperatur ≥ T₁ zeigt; und
- einen zweiten, reversiblen Farbumschlag bei einer Erniedrigung der Umgebungstemperatur auf eine Temperatur ≤ T₂ zeigt, wobei T₁ > T₂ ist;
iii) eine Komponente, welche einen weiteren Farbumschlag zeigt bei
- einer Erhöhung der Umgebungstemperatur auf eine Temperatur ≥ T₃, wobei T₃ ≤ T₁ jedoch grösser als 20°C, vorzugsweise > 30°C, besonders bevorzugt > 40°C, ist und wobei dieser weitere Farbumschlag irreversibel ist; und/oder
- einer Erniedrigung der Umgebungstemperatur auf eine Temperatur ≤ T₄, wobei T₄ ≥ T₂ jedoch kleiner als 20°C, vorzugsweise < 0°C, besonders bevorzugt < -10°C, ist und wobei dieser weitere Farbumschlag irreversibel ist;
iv) Instruktionen zur bestimmungsgemässen gemeinsamen Verwendung der Komponenten i) bis iii).

13. Verwendung eines Systems gemäss Anspruch 12, **dadurch gekennzeichnet, dass**
- Komponente i) und Komponente ii) vermischt und dann als eine thermische Farbumschläge zeigende Kunststoffzusammensetzung, insbesondere Klebstoffzusammensetzung, auf ein Substrat appliziert werden; oder
- Komponente i) und Komponente ii) im Wesentlichen getrennt voneinander auf ein Substrat aufgetragen werden, wobei Komponente ii) und Komponente iii) jedoch in räumlicher Nähe, bevorzugt unmittelbar angrenzend an Komponente i) aufgetragen wird; besonders bevorzugt wird Komponente ii) und Komponente iii) mit Komponente i) überschichtet.

14. Verwendung einer Kunststoffzusammensetzung, insbesondere Klebstoffzusammensetzung, gemäss einem der Ansprüche 1 bis 11 oder eines Systems gemäss Anspruch 12 zur Visualisierung von Temperaturschwankungen auf/bei Kunststofffolien; Klebefilmen; Lösemittel-basierten, insbesondere vernetzenden Klebstoffen und Beschichtungsmitteln; wässrigen, insbesondere vernetzenden Klebstoffen und Beschichtungsmitteln; Ein-Komponenten-Klebstoffen; Zwei-Komponenten-Klebstoffen; transparenten Etiketten; transparenten Verpackungsmitteln, insbesondere Nahrungsmittelverpackungen für Kälte- und/oder Wärme-empfindliche Waren.

## Claims

1. Polymeric composition, more particularly adhesive composition, which comprises at least one reversible color former having a memory effect, by which
- a first color change on an increase in the ambient temperature to a temperature ≥ T₁ can be displayed;
- a second color change on a lowering of the ambient temperature to a temperature ≤ T₂ can be displayed ;
where T₁ > T₂; and which exhibits at least one further color change on
- an increase in the ambient temperature to a temperature ≥ T₃, where T₃ ≤ T₁ but greater than 20°C, preferably greater than 30°C, more preferably greater than 40°C, and where this further color change is irreversible; and/or
- a lowering of the ambient temperature to a temperature ≤ T₄, where T₄ ≥ T₂ but is less than 20°C, preferably less than 0°C, more preferably less than -10°C, and where this further color change is irreversible.

2. Composition according to Claim 1, **characterized in that**
- the composition is thermoplastic, more particularly having a melt viscosity at a temperature of 160°C in the range from 1 Pa*s to 1000 Pa*s, preferably from 10 Pa*s to 40 Pa*s, determined according to DIN EN ISO 3219, cone/plate method; or
- the composition is a solvent-based composition or a dispersion.

3. Composition according to one of Claims 1 and 2, **characterized in that** in use as intended it has a 180° peel adhesion to steel of more than 5 N/25 mm, preferably of more than 6.25 N/25 mm, more preferably of more than 7.5 N/25 mm, measured in each case by method 101 of the PSTC *"Test Methods for Pressure Sensitive Adhesive Tapes",* 15th ed. (2007).

4. Composition according to any of Claims 1 to 3, **characterized in that** it is post crosslinkable, more particularly by exposure to UV radiation.

5. Composition according to any of Claims 1 to 4, having constituents selected, alone or in combination, from the group consisting of
- elastomers, especially
i) saturated thermoplastic polystyrene elastomers, TPS elastomers for short, preferably:
styrene-ethylene-butylene copolymers, SEB for short; styrene-ethylene-propylene copolymers, SEP for short; styrene-ethylene-ethylene-propylene copolymers, SEEP for short; styrene-ethylene-butylene-styrene copolymers, SEBS for short; styrene-ethylene-propylene-styrene copolymers, SEPS for short; styrene-ethylene-ethylene-propylene-styrene copolymers, SEEPS for short; and combinations thereof;
ii) unsaturated thermoplastic TPS elastomers, preferably:
styrene-butadiene block copolymers, SB for short; styrene-isoprene block copolymers, SI for short; styrene-butadiene-butylene block copolymers, SBB for short; styrene-butadiene-isoprene block copolymers, SBI for short; styrene-butadiene-styrene block copolymers, SBS for short; styrene-butadiene-butylene-styrene block copolymers, SBBS for short; styrene-isoprene-styrene block copolymers, SIS for short; styrene-butadiene-isoprene-styrene block copolymers, SBIS for short; and combinations thereof;
- tackifier resins, especially: aliphatic, cycloaliphatic and aromatic hydrocarbon-based resins; rosin (esters); terpene-based resins (including phenolic); tall oil; pentaerythritol resins, especially hydrogenated pentaerythritol resins; glycerol resins, especially hydrogenated glycerol resins; hydroabietyl resins; olefin resins; pinene resins; α-methylstyrene resins; styrene resins; coumarene-indene resins; melamine resins; polyethyleneimine resins; coumarone resins; and combinations thereof;
- plasticizers, especially: phthalates; adipates; citrates; phosphates; trimellitic acid; sulfonic acid; refined naphthalene oils; white oils, polybutylene-polyisobutylene copolymers; alkyl esters of cyclohexanedicarboxylic acid and adipic acid; acrylate plasticizer resins, especially poly-n-butyl acrylate; polyvinyl methyl ether; and mixtures thereof;
- stabilizers, especially: sterically hindered phenols, particularly as radical on phosphites; sterically hindered lactones; sterically hindered amines; and combinations thereof;
- crosslinkers, especially: metal salts, preferably zinc acetate, magnesium acetate or zirconium salts; aziridines, glyoxalates; triethylene glycol divinyl ether; acetylacetonates; and combinations thereof.

6. Composition according to any of Claims 1 to 4, **characterized in that** both the first and the second color changes are reversible.

7. Composition according to any of Claims 1 to 6, **characterized in that**
i) only the first color change; or
ii) only the second color change; or
iii) both the first and the second color changes is/are brought about by one or more encapsulated color formers.

8. Composition according to Claim 7, **characterized in that** the color former or formers are selected from the group consisting of triphenylmethane compounds, fluoran compounds, phenothiazine compounds, indolylphthalido compounds, leucoauramine compounds, spiropyran compounds, rhodamine lactam compounds, azaphthalide compounds, benzoxazine compounds, diphenylmethane phthalides, phenylindolyl phthalides, indolyl phthalides, diphenylmethane azaphthalides, phenylindolyl azaphthalides, fluorans, styrylquinolines, diazarhodamine lactones.

9. Composition according to one of Claims 7 to 8, **characterized in that** the color former or formers are encapsulated together with a developer, the developer being selected from the group consisting of
- compounds of the formula (I) 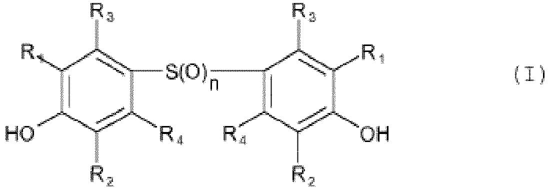 in which R₁ and R₂ are each a hydrogen atom, an alkyl radical having 1 to 3 carbon atoms, or a halogenated alkyl radical having 1 to 3 carbon atoms, a hydroxyl radical, a cyclohexyl radical or a phenyl radical (but if one of R₁ and R₂ is either cyclohexyl or phenyl radical, then the other is a hydrogen atom), R₃ and R₄ are each a hydrogen atom, an alkyl radical having 1 to 15 carbon atoms, a halogenated alkyl radical having 1 to 15 carbon atoms, a hydroxyl radical, a cyclohexyl radical, or a phenyl radical, where two of R₁ to R₄ may be different or identical to one another, but not all of R₁ to R₄ may be hydrogen atoms, and n is an integer 0, 1 or 2;
- compounds of the formula (II) 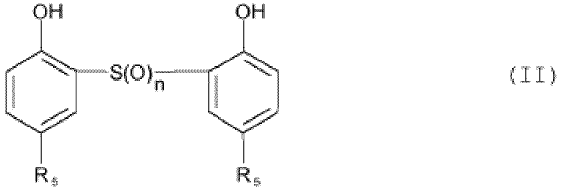 in which R₅ is an alkyl radical having 1 to 12 carbon atoms, a cyclohexyl radical having 3 to 10 carbon atoms, an aralkyl radical having 7 to 10 carbon atoms, or a phenyl radical, where two R₅ radicals may be either identical to one another or different from one another, and n is an integer 0, 1 or 2;
- bisphenol A;
and combinations thereof.

10. Composition according to any of claims 7 to 9, **characterized in that** the color former or formers are encapsulated together with a matrix material, the matrix material being selected from the group consisting of alcohols, especially stearyl alcohol; ethers; ketones; carboxylic acids; acid amides; esters, more particularly those of the formula (III) 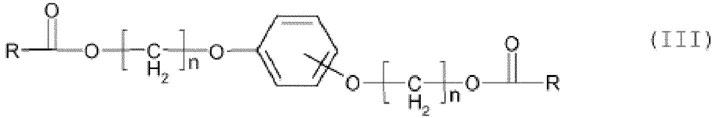 in which R is an alkyl or alkenyl group having 1 to 21 carbon atoms, it being possible for the two Rs to be identical or different, and where n is a number 1, 2 or 3; and combinations thereof.

11. Composition according to any of Claims 1 to 10, **characterized in that** the third color change is brought about by color formers which are selected from the group consisting of triphenylmethane compounds; fluoran compounds; phenothiazine compounds; indolylphthalido compounds; leucoauramine compounds; spiropyran compounds; rhodamine lactam compounds; azaphthalide compounds; benzoxazine compounds; diphenylmethane phthalides; phenylindolyl phthalides; indolyl phthalides; diphenylmethane azaphthalides; phenylindolyl azaphthalides; fluorans; styrylquinolines; diazarhodamine lactones; and mixtures thereof.

12. System for producing a polymeric composition, more particularly adhesive composition, which exhibits thermal color changes, according to any of Claims 1 to 11, comprising, as components provided separately but for joint use as intended,
i) a
- polymeric composition, more particularly thermoplastic polymeric composition, more particularly adhesive composition, or constituents for its production; or
- a solvent-based polymeric composition, more particularly adhesive composition, or constituents for its production; or
- a polymer dispersion, more particularly a dispersion-based adhesive, or constituents for its production;
ii) one or more encapsulated color formers having a memory effect, which
- exhibit a first, reversible color change on an increase in the ambient temperature to a temperature ≥ T₁; and
- exhibit a second, reversible color change on a lowering of the ambient temperature to a temperature ≤ T₂, where T₁ > T₂;
iii) a component which exhibits a further color change on
- an increase in the ambient temperature to a temperature ≥ T₃, where T₃ ≤ T₁ but greater than 20°C, preferably > 30°C, more preferably > 40°C, this further color change being irreversible; and/or
- a lowering of the ambient temperature to a temperature ≤ T₄, where T₄ ≥ T₂ but is less than 20°C, < 0°C, more preferably < -10°C, this further color change being irreversible;
iv) instructions for the as-intended joint use of components i) to iii).

13. Use of a system according to Claim 12, **characterized in that**
- component i) and component ii) are mixed and then the mixture is applied, as a polymeric composition, more particularly adhesive composition, which exhibits thermal color changes to a substrate; or
- component i) and component ii) are applied substantially separate from one another to a substrate, with component ii) and component iii) being applied but in three-dimensional vicinity, preferably immediately adjacent, to component i); more preferably component ii) and component iii) is given a coat of component i).

14. Use of a polymeric composition, more particularly adhesive composition, according to any of Claims 1 to 11 or a system according to Claim 12 for visualizing temperature fluctuations on/with polymeric sheets; adhesive films; solvent-based, especially crosslinking adhesives and coating materials; aqueous, especially crosslinking adhesives and coating materials; one-part adhesives; two-part adhesives; transparent labels; transparent packaging, especially food packaging for products sensitive to cold and/or heat.

## Revendications

1. Composition de matière plastique, notamment composition adhésive, qui comprend au moins un agent chromogène réversible présentant un effet de mémoire, grâce auquel
- un premier virage de couleur peut être indiqué lors d'une élévation de la température ambiante à une température ≥ T₁ ;
- un deuxième virage de couleur peut être indiqué lors d'une réduction de la température ambiante à une température ≤ T₂ ;
avec T₁ > T₂; et qui présente au moins un virage de couleur supplémentaire lors
- d'une élévation de la température ambiante à une température ≥ T₃, avec T₃ ≤ T₁, mais toutefois supérieure à 20 °C, de préférence supérieure à 30 °C, de manière particulièrement préférée supérieure à 40 °C, ce virage de couleur supplémentaire étant irréversible ; et/ou
- d'une réduction de la température ambiante à une température ≤ T₄, avec T₄ ≥ T₂, mais toutefois inférieure à 20 °C, de préférence inférieure à 0 °C, de manière particulièrement préférée inférieure à -10 °C, ce virage de couleur supplémentaire étant irréversible.

2. Composition selon la revendication 1, **caractérisée en ce que**
- il s'agit d'une composition thermoplastique, notamment ayant une viscosité à l'état fondu à une température de 160 °C dans la plage allant de 1 Pa*s à 1 000 Pa*s, de préférence de 10 Pa*s à 40 Pa*s, déterminée selon DIN EN ISO 3219, méthode de mesure cône/plaque ; ou
- il s'agit d'une composition à base d'un solvant ou d'une dispersion.

3. Composition selon l'une quelconque des revendications 1 ou 2, **caractérisée en ce qu'**elle présente lors d'une utilisation conforme une résistance au pelage sur de l'acier de plus de 5 N/25 mm, de préférence de plus de 6,25 N/25 mm, de manière particulièrement préférée de plus de 7,5 N/25 mm, à chaque fois mesurée selon la méthode de mesure 101 « Test Methods for Pressure Sensitive Adhesive Tapes », 15^{th} Ed. (2007) du PSTC.

4. Composition selon l'une quelconque des revendications 1 à 3, **caractérisée en ce qu'**elle est post-réticulable, notamment sous l'effet d'un rayonnement UV.

5. Composition selon l'une quelconque des revendications 1 à 4, comprenant des constituants choisis, seuls ou en combinaison, dans le groupe constitué par :
- les élastomères, notamment
i) les élastomères de polystyrène thermoplastiques saturés, en abrégé élastomères de TPS, de préférence :
les copolymères de styrène-éthylène-butylène, en abrégé SEB ; les copolymères de styrène-éthylène-propylène, en abrégé SEP ; les copolymères de styrène-éthylène-éthylène-propylène, en abrégé SEEP ; les copolymères de styrène-éthylène-butylène-styrène, en abrégé SEBS ; les copolymères de styrène-éthylène-propylène-styrène, en abrégé SEPS ; les copolymères de styrène-éthylène-éthylène-propylène-styrène, en abrégé SEEPS ; ainsi que leurs combinaisons ;
ii) les élastomères de TPS thermoplastiques insaturés, de préférence :
les copolymères séquencés de styrène-butadiène, en abrégé SB ; les copolymères séquencés de styrène-isoprène, en abrégé SI ; les copolymères séquencés de styrène-butadiène-butylène, en abrégé SBB ; les copolymères séquencés de styrène-butadiène-isoprène, en abrégé SBI ; les copolymères séquencés de styrène-butadiène-styrène, en abrégé SBS ; les copolymères séquencés de styrène-butadiène-butylène-styrène, en abrégé SBBS ; les copolymères séquencés de styrène-isoprène-styrène, en abrégé SIS ; les copolymères séquencés de styrène-butadiène-isoprène-styrène, en abrégés SBIS ; ainsi que leurs combinaisons ;
- les résines adhésives, notamment : les résines à base d'hydrocarbures aliphatiques, cycloaliphatiques et aromatiques ; les (esters de) résines de colophane ; les résines à base de terpène (également phénoliques) ; le tall oil ; les résines de pentaérythrol notamment hydrogénées ; les résines de glycérine notamment hydrogénées ; les résines hydroabiétyliques ; les résines oléfiniques ; les résines de pinène ; les résines d'α-méthylstyrène ; les résines de styrène ; les résines de coumarine-indène ; les résines de mélamine ; les résines de polyéthylène-imine ; les résines de coumarone ; ainsi que leurs combinaisons ;
- les plastifiants, notamment : les phtalates ; les adipates ; les citrates ; les phosphates ; l'acide triméllitique ; l'acide sulfonique ; les huiles de naphtaline raffinées ; les huiles blanches ; les copolymères de polybutylène-polyisobutylène ; les esters alkyliques d'acide cyclohexane-dicarboxylique et d'acide adipique ; les résines souples d'acrylate, notamment le polyacrylate de n-butyle ; le polyéther de vinylméthyle ; et leurs mélanges ;
- les stabilisateurs, notamment : les phénols à encombrement stérique, notamment en tant que résidu de phosphites ; les lactones à encombrement stérique ; les amines à encombrement stérique ; ainsi que leurs combinaisons ;
- les agents de réticulation, notamment : les sels métalliques, de préférence l'acétate de zinc, l'acétate de magnésium ou les sels de zirconium ; les aziridines, les glyoxalates ; l'éther divinylique de triéthylène glycol ; les acétylacétonates ; ainsi que leurs combinaisons.

6. Composition selon l'une quelconque des revendications 1 à 4, **caractérisée en ce qu'**aussi bien le premier virage de couleur que le deuxième est réversible.

7. Composition selon l'une quelconque des revendications 1 à 6, **caractérisée en ce que**
i) uniquement le premier virage de couleur ; ou
ii) uniquement le deuxième virage de couleur ; ou
iii) aussi bien le premier virage de couleur que le deuxième ;
sont réalisés par un ou plusieurs agents chromogènes encapsulés.

8. Composition selon la revendication 7, **caractérisée en ce que** le ou les agents chromogènes sont choisis dans le groupe constitué par les composés de triphénylméthane, les composés de fluorane, les composés de phénothiazine, les composés d'indolylphtalido, les composés de leucoauramine, les composés de spiropyrane, les composés de rhodamine-lactame, les composés d'azaphtalide, les composés de benzoxazine, les diphénylméthane-phtalides, les phénylindolyl-phtalides, les indolyl-phtalides, les diphénylméthane-azaphtalides, les phénylindolyl-azaphtalides, les fluoranes, les styrylquinolines, les diazarhodamine-lactones.

9. Composition selon l'une quelconque des revendications 7 à 8, **caractérisée en ce que** le ou les agents chromogènes sont encapsulés conjointement avec un développeur, le développeur étant choisi dans le groupe constitué par :
- les composés de formule (I) 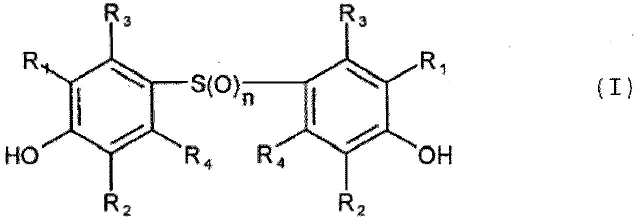 dans laquelle R₁ et R₂ représentent chacun un atome d'hydrogène, un radical alkyle de 1 à 3 atomes de carbone ou un radical alkyle halogéné de 1 à 3 atomes de carbone, un radical hydroxyle, un radical cyclohexyle ou un radical phényle (lorsque R₁ ou R₂ est un radical cyclohexyle ou phényle, alors l'autre étant toutefois un atome d'hydrogène), R₃ et R₄ représentent chacun un atome d'hydrogène, un radical alkyle de 1 à 15 atomes de carbone, un radical alkyle halogéné de 1 à 15 atomes de carbone, un radical hydroxyle, un radical cyclohexyle ou un radical phényle, deux des radicaux R₁ à R₄ pouvant être identiques ou différents l'un de l'autre, mais tous les radicaux R₁ à R₄ ne pouvant pas représenter des atomes d'hydrogène, n représente un nombre entier de 0, 1 ou 2 ;
- les composés de formule (II) 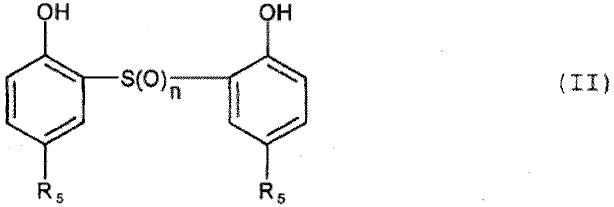 dans laquelle R₅ représente un radical alkyle de 1 à 12 atomes de carbone, un radical cyclohexyle de 3 à 10 atomes de carbone, un radical aralkyle de 7 à 10 atomes de carbone ou un radical phényle, deux R⁵ pouvant être identiques ou différents l'un de l'autre, et n est un nombre entier de 0, 1 ou 2 ;
- le bisphénol A ;
ainsi que leurs combinaisons.

10. Composition selon l'une quelconque des revendications 7 à 9, **caractérisée en ce que** le ou les agents chromogènes sont encapsulés conjointement avec un matériau de matrice, le matériau de matrice étant choisi dans le groupe constitué par les alcools, notamment l'alcool stéarylique ; les éthers ; les cétones ; les acides carboxyliques ; les amides d'acides ; les esters, notamment ceux de formule (III) 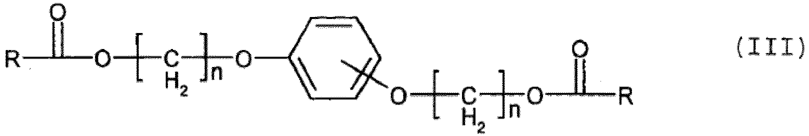 dans laquelle R signifie un groupe alkyle ou alcényle de 1 à 21 atomes de carbone, les deux R pouvant être identiques ou différents, et n est un nombre de 1, 2 ou 3 ; ainsi que leurs combinaisons.

11. Composition selon l'une quelconque des revendications 1 à 10, **caractérisée en ce que** le troisième virage de couleur est réalisé par des agents chromogènes qui sont choisis dans le groupe constitué par les agents chromogènes les composés de triphénylméthane, les composés de fluorane, les composés de phénothiazine, les composés d'indolylphtalido, les composés de leucoauramine, les composés de spiropyrane, les composés de rhodamine-lactame, les composés d'azaphtalide, les composés de benzoxazine, les diphénylméthane-phtalides, les phénylindolyl-phtalides, les indolyl-phtalides, les diphénylméthane-azaphtalides, les phénylindolyl-azaphtalides, les fluoranes, les styrylquinolines, les diazarhodamine-lactones, ainsi que leurs mélanges.

12. Système pour la fabrication d'une composition de matière plastique présentant des virages de couleur thermiques, notamment d'une composition adhésive, selon l'une quelconque des revendications 1 à 11, comprenant en tant que composants préparés séparément, mais toutefois prévus pour être utilisés ensemble de manière conforme :
i) une
- composition de matière plastique notamment thermoplastique, notamment une composition adhésive, ou les constituants pour sa fabrication ; ou
- une composition de matière plastique à base d'un solvant, notamment une composition adhésive, ou les constituants pour sa fabrication ; ou
- une dispersion de matière plastique, notamment un adhésif en dispersion, ou les constituants pour sa fabrication ;
ii) un ou plusieurs agents chromogènes encapsulés présentant un effet de mémoire, qui présentent
- un premier virage de couleur réversible lors d'une élévation de la température ambiante à une température ≥ T₁ ; et
- un deuxième virage de couleur réversible lors d'une réduction de la température ambiante à une température ≤ T₂, avec T₁ > T₂ ;
iii) un composant qui présente un virage de couleur supplémentaire lors
- d'une élévation de la température ambiante à une température ≥ T₃, avec T₃ ≤ T₁, mais toutefois supérieure à 20 °C, de préférence supérieure à 30 °C, de manière particulièrement préférée supérieure à 40 °C, ce virage de couleur supplémentaire étant irréversible ; et/ou
- d'une réduction de la température ambiante à une température ≤ T₄, avec T₄ ≥ T₂, mais toutefois inférieure à 20 °C, de préférence inférieure à 0 °C, de manière particulièrement préférée inférieure à -10 °C, ce virage de couleur supplémentaire étant irréversible ;
iv) des instructions pour l'utilisation commune conforme des composants i) à iii).

13. Utilisation d'un système selon la revendication 12, **caractérisé en ce que**
- le composant i) et le composant ii) sont mélangés, puis appliqués sous la forme d'une composition de matière plastique présentant des virages de couleur thermiques, notamment d'une composition adhésive, sur un substrat ; ou
- le composant i) et le composant ii) sont appliqués essentiellement séparément l'un de l'autre sur un substrat, le composant ii) et le composant iii) étant toutefois appliqués à proximité dans l'espace, de préférence directement à côté du composant i) ; le composant ii) et le composant iii) étant de manière particulièrement préférée revêtus avec le composant i).

14. Utilisation d'une composition de matière plastique, notamment d'une composition adhésive, selon l'une quelconque des revendications 1 à 11 ou d'un système selon la revendication 12 pour la visualisation de fluctuations de température sur des/près de films en plastique ; de films adhésifs ; d'adhésifs et d'agents de revêtement à base de solvants, notamment réticulés ; d'adhésifs et d'agents de revêtement aqueux, notamment réticulés ; d'adhésifs monocomposants ; d'adhésifs bicomposants ; d'étiquettes transparentes ; de moyens d'emballage transparents, notamment d'emballages alimentaires pour produits sensibles au froid et/ou à la chaleur.
